# EUROPÄISCHE PATENTSCHRIFT

(11) **EP 0 598 757 B1**
(45) Veröffentlichungstag und Bekanntmachung des Hinweises auf die Patenterteilung: **20.09.1995**
(21) Anmeldenummer: 92916021.6
(22) Anmeldetag: 17.07.1992
(51) Int. Cl.: G01B 11/30, G01N 21/57

(54) **VERFAHREN UND VORRICHTUNG ZUR QUANTIFIZIERTEN BEWERTUNG DES PHYSIOLOGISCHEN EINDRUCKES VON REFLEKTIONSFÄHIGEN OBERFLÄCHEN**
PROCESS AND DEVICE FOR THE QUANTIFIED EVALUATION OF THE PHYSIOLOGICAL IMPRESSION OF REFLECTIVE SURFACES
PROCEDE ET DISPOSITIF D'EVALUATION QUANTIFIABLE DE L'IMPRESSION PHYSIOLOGIQUE PRODUITE PAR DES SURFACES REFLECHISSANTES

(30) Priorität: 16.08.1991 DE 4127215
(43) Veröffentlichungstag der Anmeldung: 01.06.1994
(73) Patentinhaber: BYK-Gardner GMBH, D-82538 Geretsried (DE)
(72) Erfinder: LEX, Konrad, D-8197 Königsdorf (DE)
(74) Vertreter: Wallinger, Michael, Dr.-Ing.
(86) Internationale Anmeldenummer: EP9201635
(87) Internationale Veröffentlichungsnummer: WO9304338

(56) Entgegenhaltungen:
- WO-A-90/04166
- DE-A- 2 946 493
- US-A- 3 922 093
- US-A- 4 572 672
- US-A- 4 764 016
- US-A- 4 977 522

## Beschreibung

Die vorliegende Erfindung betrifft eine Vorrichtung und ein Verfahren zur quantifizierten Bewertung des physiologischen Eindruckes von reflektionsfähigen Oberflächen und insbesondere von lackierten Oberflächen.

Bei zahlreichen technischen Erzeugnissen ist die Beschaffenheit der sichtbaren Oberflächen ein entscheidendes Merkmal für den Gesamteindruck des Produktes. Die technischen Probleme, die dadurch entstehen, werden nachfolgend an der Gestaltung von Oberflächen von Kraftfahrzeugkarosserien erläutert, was jedoch in keiner Weise als Einschränkung für die Anwendung der vorliegenden Erfindung verstanden werden sollte.

Kraftfahrzeuge werden üblicherweise mit einer Hochglanzlackierung versehen, deren Glanzkennwert dem Glanzkennwert von anderen Flächen, z.B. Möbelflächen und dgl., in der Regel weit überlegen ist. Der hohe Glanz der verwendeten Lacke und die relativ großen Flächen erfordern eine außerordentlich sorgfältige Vorbereitung der zu lackierenden Flächen und eine sehr sorgfältige Auftragung des Lackes. Um Qualitätsmängel von lackierten Karosserieflächen zu erkennen, beschäftigen die Automobilhersteller heute eine Vielzahl von Prüfern, die die Qualität der Flächen visuell prüfen. Diese Methode bringt jedoch eine ganze Reihe von Nachteilen mit sich.

Die Arbeit der Prüfer ist sehr anstrengend und erfordert Werkräume, deren Lichtverhältnisse immer exakt definiert sind. Dennoch wurden große Unterschiede bei der Bewertung von gleichen Lackflächen durch verschiedene Prüfer festgestellt, da zum einen der jeweilige physiologische Eindruck von Prüfer zu Prüfer unterschiedlich ist und da zum anderen das Sehvermögen des individuellen Prüfers auch von dessen jeweiliger physischer Verfassung abhängt. Es bereitet somit große Schwierigkeiten, eine untere Qualitätsgrenze zu definieren, deren Unterschreiten nicht mehr hingenommen werden kann und eine Neulackierung der Fahrzeugkarosserie erforderlich macht. Weiterhin ist es auch für erfahrene Prüfer schwierig festzustellen, welche Ursachen eine Lackunebenheit hat, so daß es schwierig ist, aufgrund der gemachten Beobachtungen die Steuerungswerte einer automatischen Lackiereinrichtung zur Verbesserung der Qualität zu verändern.

In der DE-OS 29 46 493, die zur Bildung des Oberbegriffes des Hauptanspruches herangezogen wurde, ist ein Verfahren zur Bewertung der Ebenheit optisch reflektierender Oberflächen beschrieben. Bei diesem Verfahren wird die zu prüfende Oberfläche mit einer Punktlichtquelle (im Ausführungsbeispiel eine 100 Watt Halogenlampe und eine Lochblende) im definierten Abstand (beim Ausführungsbeispiel 1 m) beleuchtet. Das von der zu prüfenden Oberfläche reflektierte Lichtbündel wird auf einer Mattscheibe sichtbar gemacht, wobei die Helligkeitsverteilung des reflektierten Lichtes von der Oberflächenstruktur abhängt. Um die Helligkeitsverteilung zu erfassen, wird die zu prüfende Oberfläche in bezug auf die Lampe bewegt und das reflektierte Licht mittels eines feststehenden Photodetektors aufgenommen. Beim Ausführungsbeispiel ist dieser Photodetektor 25 cm von der zu prüfenden Oberfläche angeordnet. Die Schwankungen der Helligkeit dienen dann als Maß für die Qualitätsbewertung der Oberfläche. Bezüglich des weiteren Standes der Technik wird auf die ausführliche Darstellung in der DE-OS 29 46 493 verwiesen.

Das vorstehend beschriebene Verfahren hat sich in der Praxis nicht durchsetzen können. Der Grund ist vor allem darin zu sehen, daß zwar eine Qualitätskennzahl für die Qualität der Oberfläche ermittelt wird, daß diese Qualitätskennzahl jedoch nicht ausreicht, um den für die Beurteilung maßgeblichen physiologischen Eindruck der zu prüfenden Oberfläche zu kennzeichnen.

Es ist deshalb die Aufgabe der vorliegenden Erfindung, ein Verfahren und eine Vorrichtung der eingangs genannten Art so weiterzubilden, daß damit eine reproduzierbare, quantifizierte Bewertung des physiologischen Eindruckes von reflektionsfähigen Oberflächen entsteht.

Ein weiterer Aspekt der Aufgabe ist es, eine Vorrichtung zu schaffen, die klein und leicht gestaltet ist, und die derart beschaffen ist, daß sie von einer Bedienungsperson ohne weitere Hilfsmittel zur quantifizierten Bewertung einer Oberfläche herangezogen werden kann.

Diese Aufgabe wird erfindungsgemäß durch ein Verfahren gelöst, wie es in Anspruch 1 definiert ist. Die erfindungsgemäße Vorrichtung ist Gegenstand des Anspruches 5. Die Weiterbildung der Vorrichtung, die sich besonders als Handmeßinstrument eignet, ist Gegenstand des Anspruches 7.

Das erfindungsgemäße Verfahren schafft die Möglichkeit, den physiologischen Eindruck einer Oberfläche in reproduzierbarer und exakter Weise zu quantifizieren. Durch das gewählte Meßverfahren wird vermieden, daß mikroskopische Eigenschaften der Oberfläche, die den physiologischen Eindruck nicht beeinträchtigen, in die Qualitätsbewertung eingehen.

Besonders vorteilhaft ist weiterhin, daß durch das gewählte Verfahren eine exakte Analyse der Wellenlänge der einzelnen Störungen möglich ist, so daß Rückschlüsse auf die Verursachung der Qualitätsmängel gezogen werden können.

Gemäß einer bevorzugten Weiterbildung des Verfahrens wird zunächst eine Vielzahl von Meßwerten aufgenommen, die nach dem erfindungsgemäßen Verfahren ausgewertet werden. Diese aufgenommenen Meßwerte werden als Helligkeitsmeßwerte bezeichnet. Im darauffolgenden Auswerteschritt werden aus den Helligkeitsmeßwerten Oberflächenmeßwerte gebildet, indem jeweils eine Anzahl N₁ vorlaufender Meßwerte und eine Anzahl N₂ nachlaufender Meßwerte mitberücksichtigt werden. Dabei ist vorzugsweise die Anzahl N₁ gleich der Anzahl von N₂ Meßwerten. Es ist selbstverständlich, daß die Bestimmung der Oberflächenmeßwerte nach dem Verfahren voraussetzt, daß zunächst die Anzahl von N₁ Helligkeitsmeßwerten vor dem ersten, bestimmbaren Oberflächenmeßwert aufgenommen wird, und daß nach dem letzten Oberflächenmeßwert eine weitere Anzahl von N₂ Helligkeitsmeßwerten aufgenommen werden muß. Die Messung erfordert also, vereinfacht ausgedrückt, einen Vorlauf und einen Nachlauf.

Wenn alle Helligkeitsmeßwerte aufgenommen sind, kann die Auswertung auch nacheinander mit unterschiedlichen Zahlen für N₁ und N₂ erfolgen. So kann (angenommen, daß N₁ gleich N₂ gewählt ist) die Messung mit 50, 40, 30, 20 und 10 vorlaufenden und nachlaufenden Meßpunkten ausgewertet werden. Dabei werden bei der höheren Anzahl von Meßwerten die langwelligeren Oberflächenstörungen besser erfaßt und bei der kleineren Anzahl die kurzwelligen.

Wie das nachfolgend beschriebene Ausführungsbeispiel zeigt, kann die Vorrichtung sehr klein und handlich gestaltet werden, so daß sie unmittelbar als Handmeßgerät eingesetzt werden kann. In diesem Fall werden vorzugsweise Gummiräder oder Gummiwalzen verwendet, die die Relativbewegung zwischen Oberfläche und Vorrichtung unmittelbar erfassen und somit die exakte geometrische Zuordnung der Meßpunkte zur Oberfläche sicherstellen.

Weitere Vorteile, Merkmale und Anwendungsmöglichkeiten der vorliegenden Erfindung ergeben sich aus der nachfolgenden Beschreibung im Zusammenhang mit der Zeichnung. Darin zeigen:
Fig. 1 ein Blockdiagramm, welches die Funktion des erfindungsgemäßen Verfahrens und der erfindungsgemäßen Vorrichtung beschreibt;
Fig. 2a eine schematische Darstellung zur Erläuterung der Aufnahme der Meßwerte gemäß dem erfindungsgemäßen Verfahren;
Fig. 2b ein mit dem erfindungsgemäßen Verfahren erzieltes Ergebnis;
Fig. 3 einen schematischen Längsschnitt durch eine Ausführungsform einer Vorrichtung gemäß der Erfindung;
Fig. 4 eine Stirnansicht des Ausführungsbeispieles gemäß Fig. 3, und zwar von der, in Fig. 3 rechten Seite, aus gesehen.

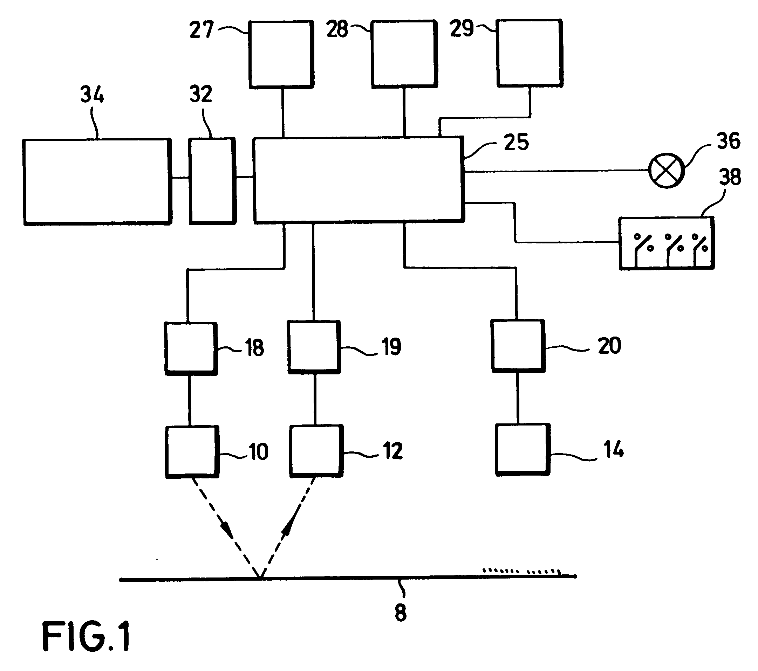

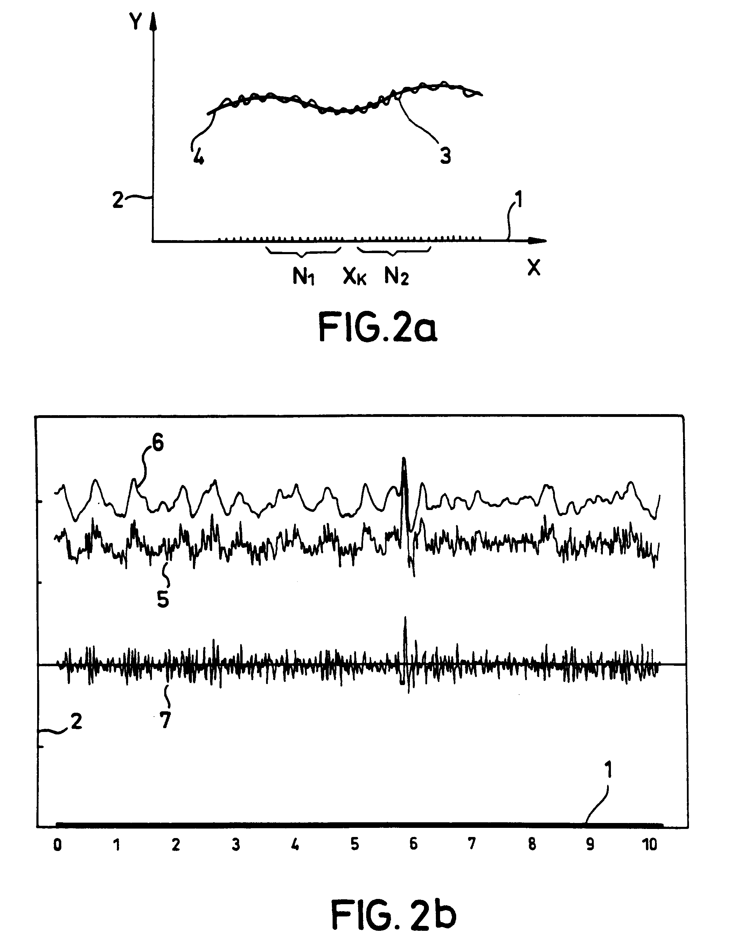

Das Meßverfahren wird zunächst in bezug auf die Fig. 1 und 2a erläutert. In Fig. 2a ist ein rechtwinkliges Koordinatensystem dargestellt, wobei die X-Achse 1 der zu messenden Oberfläche entspricht, und auf der Y-Achse 2 die aufgenommenen Helligkeitsmeßwerte und die durch das erfindungsgemäße Verfahren erhaltenen Oberflächenmeßwerte, aus der dann die Qualitätskennzahl abgeleitet wird, aufgetragen sind. Der Signalverlauf der Helligkeitsmeßwerte ist mit 3 gekennzeichnet und die geglätteten Oberflächenmeßwerte, die für die Ableitung der Qualitätskennzahl verwendet werden, mit dem Bezugszeichen 4.

Die Messung eines bestimmten Punktes X_{K} geht folgendermaßen vonstatten:

Zunächst wird eine Anzahl von N₁ Meßwerten aufgenommen, deren X-Koordinate kleiner ist als X_{K} und die jeweils einen konstanten Abstand zueinander aufweisen. Die X-Achse gibt also unmittelbar die Weg-Koordinate der zu messenden Oberfläche wieder. Nachdem die Anzahl N₁ äquidistanter Meßwerte aufgenommen wurde, wird der eigentliche Meßwert X_{K} aufgenommen und dann anschließend eine Anzahl von N₂ Meßwerten, die wiederum an äquidistanten Streckenpunkten ermittelt werden. Beim dargestellten Ausführungsbeispiel sind die Streckenabstände der einzelnen Punkte, die vor dem Meßwert X_{K} aufgenommen werden, und der Abstand der Punkte, die nach dem Meßwert X_{K} aufgenommen werden, gleich. Weiterhin ist auch die Anzahl N₁ vor dem aufzunehmenden Oberflächenmeßwert genauso groß wie die Anzahl N₂ nach diesem Wert.

Aus den aufgenommenen Meßwerten N₁, X_{K} und N₂ wird nun der Oberflächenmeßwert für die Stelle X_{K} ermittelt. Dies geschieht durch eine statistische Analyse der aufgenommenen Helligkeitsmeßwerte, z.B. eine Mittelwertbildung. Als besonders günstig hat sich erwiesen, die Meßwerte zu gewichten, d.h. die Werte umso stärker in die statistische Analyse eingehen zu lassen, je näher sie an dem Meßpunkt X_{K} liegen.

Der Kurvenzug 3 in Fig. 2a zeigt die Helligkeitsmeßwerte, die jeweils für die individuelle Meßstelle X_{I} auf der X-Achse ermittelt.wurden, ohne daß die vorlaufenden Meßwerte N₁ und die nachlaufenden Meßwerte N₂ berücksichtigt wurden. Die Darstellung zeigt einen sehr stark schwankenden Verlaüf, aus dem sich keine zuverlässigen Angaben über die Oberflächenstruktur entnehmen lassen. Die Kurve 3 zeigt also das Ergebnis der Helligkeitsmessung ohne das erfindungsgemäße Verfahren.

Die Kurve 4 zeigt das Ergebnis des erfindungsgemäßen Meßverfahrens. Hier ist deutlich eine langgezogene Welle zu erkennen, die hinsichtlich ihrer Amplitude und ihrer Wellenlänge genau analysiert werden kann. Dadurch ist es z.B. möglich, bei einer Lackierung zwischen kurzwelligen und langwelligen Oberflächenstörungen zu unterscheiden. Kurzwellige Oberflächenstörungen in einer Lackierung werden beispielsweise durch Sprühnebel hervorgerufen, während langwellige Strukturen durch Verlaufsstörungen im Lack bedingt sind. Es ist also durch die Analyse z.B. möglich, festzustellen, daß ein gewisser Prozentsatz von lackierten Oberflächen langwellige Störungen, d.h. also Verlaufstörungen aufweist, und den Lackierprozeß dann dementsprechend zu verbessern.

Da, wie in Fig. 2a dargestellt, eine Reihe von Meßwerten vor und nach einem bestimmten Meßpunkt an der Oberfläche aufgenommen werden müssen, hat es sich als besonders günstig herausgestellt, daß zunächst sämtliche Helligkeitsmeßwerte ermittelt und in einem Speicher eingelesen werden, und daß dann nachfolgend die Meßwerte aus dem Speicher ausgelesen und in der beschriebenen Weise ausgewertet werden.

Für die Beurteilung der Lackierung von Autokarosserien hat es sich als besonders günstig herausgestellt, als Meßstrecke eine Wegstrecke von 11 cm auszuwählen, auf denen 1.300 Meßwerte aufgenommen werden. Diese Meßwerte werden gespeichert und anschließend analysiert.

In einer Verfeinerung dieser Methode kann dann die Anzahl N₁ und N₂ der zur Bildung eines Oberflächenwertes an einer Stelle X_{K} herangezogenen Meßwerte variiert werden. Ist die Anzahl geringer, z.B. 10 Meßwerte links und rechts von X_{K} treten die kurzwelligen Störungen stärker hervor, ist die Anzahl größer, werden die langwelligen Störungen deutlicher sichtbar.

In der Fig. 2b ist anhand tatsächlich aufgenommener Meßwerte dargestellt, wie sich diese unterschiedliche Analyse auf das Meßergebnis auswirkt. Die wiederum mit 1 bezeichnete X-Achse gibt die Lage des jeweiligen Meßpunktes auf der zu messenden Oberfläche an, wobei die Zahlen 0 bis 10 den Streckenverlauf in Zentimeter wiedergeben. Die gesamte Meßstrecke ist also hier ca. 11 cm lang.

Auf der mit 2 bezeichneten Y-Achse sind, mit dimensionslosen Werten, die jeweiligen Meßergebnisse aufgetragen.

Der Kurvenzug 5 bezeichnet die während der Messung tatsächlich aufgenommenen Helligkeitsmeßwerte. Diese wurden in einem Speicher abgespeichert und wurden dann anschließend nach dem erfindungsgemäßen Verfahren analysiert. Die Kurve 6 zeigt die Oberflächenmeßwerte, die sich aus der langwelligen Analyse der Helligkeitsmeßwerte ergeben. Es ist deutlich zu erkennen, daß sich eine Grundstruktur der Oberfläche ergibt, die frei von kleineren Schwankungen ist und aus der sich z.B. der Verlauf des Lackes beurteilen läßt.

Der Kurvenzug 7 zeigt die Oberflächenmeßwerte bei einer kurzwelligen Analyse der in der Kurve 5 dargestellten Helligkeitsmeßwerte. Die langwelligen Oberflächenstörungen spielen, wie zu erkennen ist, hier keine Rolle.

Aus den Kurvenzügen 6 und 7 wird nun jeweils eine oder mehrere Qualitätskennzahlen zur Beurteilung der Oberflächenqualität ermittelt. Dies kann z.B. geschehen, indem die Varianz der Oberflächenmeßwerte bestimmt wird.

Die in Fig. 1 schematisch dargestellte Vorrichtung arbeitet nach dem vorstehend beschriebenen Prinzip, d.h. sie nimmt auf einmal eine vorbestimmte Anzahl von Meßpunkten mit konstantem Abstand auf und wertet dieses anschließend nach dem erfindungsgemäßen Verfahren aus.

Die Meßvorrichtung weist einen Laser 10 auf, der vorzugsweise im Wellenlängenbereich des sichtbaren Lichtes arbeitet, was die Messung verbessert und auch aus Sicherheitsgründen günstiger ist. Das vom Laser in einem Winkel von 60° zur Oberfläche ausgestrahlte Licht wird dort reflektiert und gelangt in einen Photodetektor 12. Der Photodetektor 12 weist einen Filter auf, der der Wellenlänge des Lasers angepaßt ist, so daß das Umgebungslicht nur einen vernachlässigbar geringen Einfluß hat.

Die Vorrichtung weist weiterhin einen Weggeber 14 auf, der die Wegabstände der Vorrichtung in bezug auf die zu messende Oberfläche erfaßt und einen Impuls ausgibt, wenn eine bestimmte Wegstrecke zurückgelegt wurde und ein neuer Meßwert aufzunehmen ist.

Der Laser 10, der Photodetektor 12 und der Weggeber 14 sind jeweils über eine Signalverarbeitungseinrichtung 18, 19 und 20 mit einer Prozessoreinrichtung, vorzugsweise einer Mikroprozessoreinrichtung 25, verbunden, die die Funktion der gesamten Vorrichtung steuert. Die Mikroprozessoreinrichtung ist dazu mit einem Zeitgeber 27, einem Festwertspeicher 28 und einem Speicher für wahlfreien Zugriff 29 verbunden. Der Zeitgeber dient zur Zeitsteuerung der gesamten Vorrichtung, im Festwertspeicher 28 ist ein Programm abgespeichert, das die Steuerung der Vorrichtung bewirkt. Im Speicher 29 werden die gespeicherten Meßdaten abgelegt.

Über eine Signalverarbeitungseinrichtung 32 ist der Mikroprozessor weiterhin mit einem Display 34 verbunden, das zur Ausgabe der Meßwerte und zum Dialog mit dem Benutzer dient. Weiterhin wird über diese Signalverarbeitungseinrichtung eine LED 36 angesteuert, die aus Sicherheitsgründen immer dann leuchtet, wenn der Laser aktiv ist.

Es ist weiterhin eine Schalteinrichtung 38 vorgesehen, die mehrere Schalter aufweist, um Steuersignale durch den Benutzer einzugeben.

Zur Stromversorgung der Einrichtung dient eine (in Fig. 1 nicht dargestellte) Batterie.

Die Funktion dieser Vorrichtung ist wie folgt:

Die Vorrichtung wird entweder insgesamt, oder nur mit einem Bauteil, das den Laser 10, den Photodetektor 12 und den Wegstreckengeber 14 beinhaltet, relativ zu der zu prüfenden Oberfläche 8 bewegt. Dabei spielt die Geschwindigkeit dieser Bewegung keine Rolle. Der Laser wird mit Energie versorgt und strahlt Licht auf die zu reflektierende Oberfläche. Das reflektierte Licht wird vom Photodetektor aufgenommen und über die Signalverarbeitungsschaltung 19, wo z.B. eine A/D Wandlung vorgenommen wird, dem Mikroprozessor 25 zugeführt. Es wird ein erster Meßwert aufgenommen und im Speicher 29 abgelegt, wobei der Wegstreckengeber 14 die Position dieses ersten Meßpunktes erfaßt. Anschließend wird immer dann ein neuer Meßwert erfaßt und eingelesen, wenn der Wegstreckengeber ein Signal ausgibt, daß sich der jeweilige Meßpunkt auf der Oberfläche um die vorbestimmte Wegstreckenlänge weiterbewegt hat. Der Laser und der Photodetektor bleiben dabei ständig in Betrieb. Sobald, im vorliegenden Fall, eine Meßstrecke von 11 cm zurückgelegt wurde, und somit rund 1.300 Meßwerte im Speicher 29 abgelegt sind, ist der eigentliche Meßvorgang abgeschlossen.

Die Vorrichtung kann nun so gestaltet sein, daß aus diesen Werten mittels des im Speicher 28 gespeicherten Programms die Oberflächenmeßwerte und eine oder mehrere Qualitätskennwerte ermittelt und im Display 34 angezeigt werden, die dem Benutzer Aufschluß über die Qualität der geprüften Oberfläche geben.

Bei einer alternativen Gestaltung des Gerätes können die Werte auch an einen externen Rechner ausgelesen werden, der dann aus den Meßwerten die Oberflächenmeßwerte und die Qualitätskennzahlen bestimmt. Bei der letzteren Version wird der Speicher 29 so ausgelegt und das Programm 28 so gestaltet, daß mehrere Meßwertreihen, z.B. 5 oder 10 für verschieden zu prüfende Oberflächenabschnitte, im Speicher 29 aufgenommen werden können.

Es ist selbstverständlich auch möglich, die Vorrichtung online mit einem Rechner zu verbinden, d.h. die Meßwerte zunächst zu erfassen und dann in einem Auslesevorgang an den übergeordneten Rechner zu übertragen. Dabei können die von dem übergeordneten Rechner ermittelten Ergebnisse wieder an die Vorrichtung zurückübertragen und dort angezeigt werden.

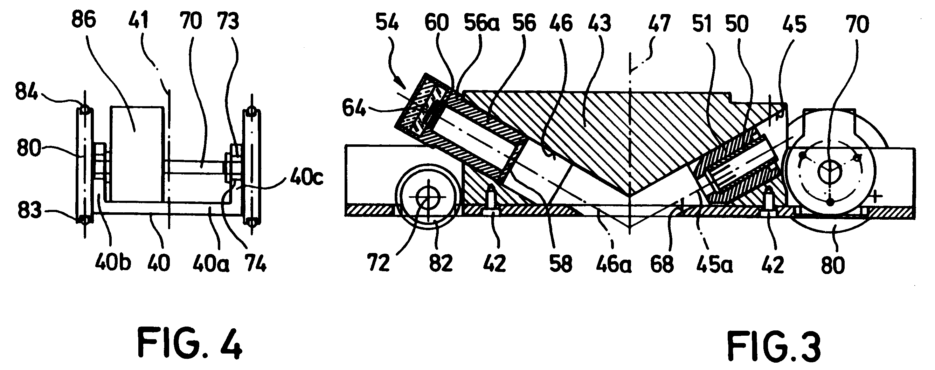

Ein Ausführungsbeispiel einer Vorrichtung, die nach dem Blockschaltbild in Fig. 1 gestaltet ist, wird nun in bezug auf die Fig. 3 und 4 erläutert.

Die dargestellte Vorrichtung ist so gestaltet, daß sie in einem Gehäuse angeordnet werden kann, dessen Abmesungen kleiner sind als 180 mm x 50 mm x 120 mm. Die Vorrichtung ist jedoch in den Fig. 3 und 4 nur teilweise dargestellt.

Die Vorrichtung weist einen U-förmigen Profilrahmen 40 auf, der z.B. aus Aluminium gefertigt ist, und der sich im wesentlichen über die gesamte Länge der Vorrichtung erstreckt. Das Profil weist eine Bodenplatte 40a, einen ersten Seitenflansch 40b und einen zweiten Seitenflansch 40c auf. Das Profil hat eine vertikale Symmetrieebene 41, die senkrecht zur Bodenplatte 40a verläuft.

Auf der Bodenplatte 40a ist mittels Schrauben 42 ein Block 43 festgeschraubt. Der Block 43 weist zwei zylindrische Bohrungen 45 und 46 auf, deren (fiktive) Zylinderachsen 45a und 46a innerhalb der Symmetrieebene 41 verlaufen. Die Bohrungen sind beide um exakt 30° zur Bodenplatte 40a geneigt, das bedeutet, daß sie zur querverlaufenden Symmetrieebene 47 jeweils einen Winkel von 60° einnehmen. Die Bohrungen sind so angeordnet, daß sich ihre Zylinderachsen 45a und 46a exakt auf einem Punkt der zu mesenden Oberfläche schneiden.

In der ersten Bohrung 45 ist ein handelsüblicher Halbleiterlaser 50 angeordnet, der einen Lichtstrahl mit einer Wellenlänge von 670 nm in einer Richtung ausstrahlt, die exakt der Richtung der Zylinderachse 45a entspricht. Der Laser 50 ist mit einem Kunststoffblock 51 in die Bohrung 45 eingeklebt.

In der Bohrung 46 ist die Photodetektoreinrichtung 54 angeordnet. Die Detektoreinrichtung weist einen Tubus 56 auf, der an seinem vorderen Ende mittels eines Farbfilters 58 verschlossen ist. Der Farbfilter ist so bemessen, daß er im wesentlichen nur die Wellenlänge des Laserlichtes des Lasers 50 durchläßt. Am Ende 56a des Tubus befindet sich ein Infrarotfilter 60, der als Wärmeschutzfilter eingesetzt ist, sowie eine rechteckige Blende, deren Blendenöffnung ca. 0,3 x 0,8 mm beträgt. Daran schließt sich der lichtempfindliche Teil 64 an, in dem ein elektrisches analoges Signal erzeugt wird, das eine Funktion der einfallenden Lichtmenge ist.

Im unteren Bereich der Bodenplatte 40a ist eine Öffnung 68, die den Austritt und Wiedereintritt des Laserlichtes aus der Vorrichtung ermöglicht. Um ein Arbeiten mit der Vorrichtung auch außerhalb spezieller Lichtschutzräume und auch ohne Schutzbrille zu ermöglichen, ist die Leistung des Lasers so bemessen, daß sie maximal 1 mW beträgt.

Vorzugsweise wird diese Leistung auch durch die Mikroprozessoreinrichtung in geeigneter Weise kontrolliert.

In den Endbereichen des Profiles 40 sind zwei Achsen 70, 72 vorgesehen, die in Bohrungen 73 der Seitenflansche 40b und 40c angeordnet sind, und die die Seitenflansche durchdringen. Die Achsen 70, 72 sind parallel zur Bodenplatte 40a des Profiles 40.

Die Führungen der Achsen in den Seitenflanschen erfolgt über Lagerschalen 74, die in Fig. 4 schematisch angedeutet sind.

Auf die Enden der beiden Achsen 70, 72 sind erste Räder 80 mit größerem Durchmesser und zweite Räder 82 mit kleinerem Durchmesser aufgedrückt. Die Räder bestehen aus Kunststoff und weisen eine umlaufende Rille 83 auf, in der jeweils ein Gummiring 84, vorzugsweise ein sogenannter 0-Ring, eingelegt ist.

Die Shore-Härte dieser Gummiringe 84 ist so gewählt, daß der Ring einerseits weich genug ist, um den Kontakt zur zu messenden Oberfläche zu bewirken, ohne die Oberfläche zu beschädigen, daß er andererseits aber auch nicht so weich ist, daß Staubkörner oder dgl. sich an ihm festsetzen können.

Die Achse 70 der großen Räder 80 durchdringt einen handelsüblichen Drehwinkelgeber 86, und ist drehfest mit diesem verbunden. Das Gehäuse des Drehwinkelgebers 86 ist in bezug auf das Profil 40 festgelegt. Der Drehwinkelgeber ist so beschaffen, daß immer dann ein elektrischer Impuls ausgegeben wird, wenn sich die Achse 70 um einen vorbestimmten Winkel, z.B. um 1°, dreht.

Das Profil 40 und der daran befestigte Block 43 sind in einem Gehäuse befestigt, das aus Gründen der Übersichtlichkeit nicht dargestellt ist. In diesem Gehäuse sind weiterhin eine Batterie und alle elektronischen Baueinheiten untergebracht, die vorstehend in bezug auf die Fig. 1 beschrieben wurden. Das Gehäuse ist so gestaltet, daß sich die Räder 80, 82 mit den jeweiligen Achsen frei drehen können.

Die Funktion dieser Vorrichtung ist nun wie folgt:

Das Gehäuse, das im montierten Zustand ungefähr die Größe eines dickeren Taschenbuches aufweist, wird von einer Bedienungskraft in der Hand gehalten und mit den Rädern 80, 82 auf die zu messende Oberfläche aufgesetzt. Anschließend wird das Gerät mit der Hand entsprechend der Orientierung der Räder 80, 82 über die Oberfläche bewegt, wobei sich die Räder drehen. Nach Beginn des Meßzyklus werden, wie beschrieben, 1.300 Meßpunkte aufgenommen und in dem Speicher 29 abgespeichert. Die erforderliche Äquidistanz der Meßpunkte wird durch den Drehwinkelgeber 86 bewirkt, dessen Impulse von der Mikroprozessoreinrichtung zur Steuerung der Meßaufnahme verwendet werden.

Für die Meßgenauigkeit ist es daher unerheblich, mit welcher Geschwindigkeit die Vorrichtung über die zu prüfende Oberfläche bewegt wird, und ob sich die Geschwindigkeit während der Meßwertaufnahme ändert.

Durch den Abstand, den die Kontaktpunkte der Räder 80, 82 an der zu messenden Oberfläche zur unteren Fläche des Profiles 40 aufweisen, ist sichergestellt, daß sich das Gerät auch für das Abtasten von gewölbten Flächen, z.B. im Kotflügel oder Dachbereich einer Fahrzeugkarosserie, eignet. In diesem Zusammenhang ist darauf hinzuweisen, daß Fahrzeugkarosserien aus fertigungstechnischen Gründen niemals ganz ebene Oberflächen aufweisen.

Um eine sichere Meßwertaufnahme unter allen Umständen zu gewährleisten, kann die Mikroprozessoreinrichtung noch kontrollieren, ob alle erforderlichen Randbedingungen der Messung eingehalten wurden. Sie kann dann z.B. eine Warnung ausgeben, wenn die Meßstrecke, um die die Vorrichtung bewegt wurde, zu kurz war und dgl.

Die erfindungsgemäße Vorrichtung, wie sie vorstehend beschrieben wurde, bringt bei der täglichen Prüfarbeit z.B. in der Fahrzeuglackierung erhebliche Vorteile. So kann z.B. an den Lackstellen, an denen der Prüfer durch die visuelle Prüfung Qualitätseinbußen befürchtet oder feststellt, wird das erfindungsgemäße Gerät aufgesetzt und die Qualitätskennzahl oder -kennzahlen der Oberfläche ermittelt werden. Der Prüfer kann dann anhand eines genau definierten Wertes feststellen, ob sich die geprüfte Lackfläche noch innerhalb des zulässigen Toleranzrahmens der Lackqualität bewegt. Er ist dabei, im Unterschied zum herkömmlichen Verfahren, nicht mehr auf sein subjektives Empfinden angewiesen.

Weiterhin kann die Vorrichtung detaillierte Auskunft darüber geben, in welchem Wellenbereich sich die jeweilige optische Störung befindet, so daß die Analyse der auftretenden Störungen zur Optimierung der Lackiereinrichtungen dienen kann.

Neben der beschriebenen manuellen Verwendung des Gerätes ist es auch möglich, das Gerät automatisch zu verwenden. So kann beispielsweise ein Gerät, wie es in Fig. 3 und 4 dargestellt ist, auch durch einen Handhabungsautomaten auf eine zu prüfende Fläche aufgesetzt werden. In diesem Fall wird die Vorrichtung dann vorzugsweise online mit der Recheneinrichtung verbunden, die die Steuerung der Fertigung bewirkt.

Falls entsprechende Einrichtungen vorhanden sind, kann bei einer automatischen Meßaufnahme gegebenenfalls auch auf die Räder und die Drehwinkelgeber verzichtet werden, und eine anders geartete Technik der Wegstreckenaufnahme verwendet werden.

## Patentansprüche

1. Verfahren zur quantifizierbaren Bewertung des physiologischen Eindruckes von reflektionsfähigen Oberflächen, und insbesondere von lackierten Oberflächen mit:
einer punktförmigen Lichtquelle (10), deren Lichtstrahl in einem vorbestimmten Winkel auf die zu messende Oberfläche (8) gerichtet ist,
einer Photodetektoreinrichtung (12), welche das von der Oberfläche reflektierte Licht erfaßt und ein elektrisches Signal ausgibt, welches die Menge des erfaßten Lichtes charakterisiert,
einer Recheneinrichtung (25), welcher der das von dem Photodetektor ausgegebene Signal zugeführt wird, und die daraus eine Qualitätskennzahl für die zu messende Oberfläche ermittelt,
wobei während des Meßvorganges eine Relativbewegung zwischen der punktförmigen Lichtquelle und der zu messenden Oberfläche bewirkt wird,
**dadurch gekennzeichnet**,
daß die punktförmige Lichtquelle und die Photodetektoreinrichtung gemeinsam relativ zur zu messenden Oberfläche bewegt werden,
daß die Relativbewegung zwischen der punktförmigen Lichtquelle, der Photodetektoreinrichtung und der zu messenden Oberfläche mittels einer Wegmeßeinrichtung erfaßt wird,
daß die Recheneinrichtung durch ein in einem Speicher (28) abgelegtes Programm so gesteuert ist, daß das elektrische Signal des Photodetektors an vorbestimmten Punkten der zu messenden Oberflächen aufgenommen und in einen Speicher abgelegt wird,
daß zur Ermittlung eines Oberflächenmeßwertes an einem bestimmten Oberflächenpunkt X_{K} zunächst eine erste Anzahl N₁ von aufeinanderfolgenden Helligkeitsmeßwerten an äquidistanten Meßpunkten aufgenommen werden, die vor diesem Wert X_{K} liegen, daß dann der Helligkeitsmeßwert für X_{K} aufgenommen wird, und daß anschließend der Helligkeitsmeßwert für eine zweite Anzahl von N₂ Meßwerten an Punkten der Oberfläche aufgenommen wird, die hinter diesem Meßpunkt X_{K} liegen, daß daraus ein Oberflächemeßwert für den Meßpunkt X_{K} ermittelt wird, und daß anschließend aus allen, entlang der Meßstrecke bestimmten Oberflächenmeßwerten eine oder mehrere Qualitätskennzahlen für die gemessene Oberfläche abgeleitet wird.

2. Verfahren gemäß Anspruch 1, dadurch gekennzeichnet, daß die Helligkeitsmeßwerte zunächst für eine vorbestimmte Anzahl äquidistanter Meßpunkte auf der zu messenden Oberfläche bestimmt und gespeichert werden, und daß anschließend aus den gespeicherten Werten die Oberflächenmeßwerte für eine vorbestimmte Anzahl von Meßpunkten bestimmt wird, wobei jeweils die benachbarten N₁ bzw. N₂ Helligkeitsmeßwerte herangezogen werden.

3. Verfahren nach Anspruch 1 oder 2, dadurch gekennzeichnet, daß die Anzahl der bei der Auswertung herangezogenen vorlaufenden Helligkeitsmeßwerte N₁ gleich der Anzahl der bei der Auswertung berücksichtigten nachlaufenden Helligkeitsmeßwerte N₂ ist.

4. Verfahren nach Anspruch 2 oder 3, dadurch gekennzeichnet, daß bei einer aufgenommenen Meßreihe von Helligkeitsmeßwerten eine Vielzahl von Auswertereihen durchgeführt wird, wobei für jede Auswertereihe die Anzahl der vorlaufenden bzw. nachlaufenden berücksichtigten N₁, N₂ Helligkeitsmeßwerte verändert wird.

5. Vorrichtung zur quantifizierten Bewertung des physiologischen Eindruckes von reflektionsfähigen Oberflächen, insbesondere von lackierten Oberflächen, und insbesondere zur Durchführung des Verfahrens gemäß einem der Ansprüche 1 bis 4, mit:
einer punktförmigen Lichtquelle in Form eines Lasers (50), dessen Lichtstrahl in einem vorbestimmten Winkel auf die zu messende Oberfläche gerichtet ist,
einem Photodetektor (54), der so angeordnet ist, daß er das von der zu messenden Oberfläche reflektierte Licht aufnimmt und ein elektrisches Signal ausgibt, das für die aufgenommene Lichtmenge repräsentativ ist,
einer Auswerteeinrichtung, welche aus den von dem Photodetektor ausgegebenen Signalen einen Qualitätskennwert für die zu messende Oberfläche ableitet,
dadurch gekennzeichnet,
daß der Photodetektor (54) mit einem Filter (58) versehen ist, der so abgestimmt ist, daß er bevorzugt Licht mit der Wellenlänge durchtreten läßt, die der Wellenlänge des Lasers entspricht,
daß der Laser (50) und der Photodetektor (54) in einer vorbestimmten und unveränderbaren räumlichen Anordnung zueinander stehen und relativ zur zu messenden Oberfläche bewegbar sind, und
daß eine Wegstreckenmeßeinrichtung (86) vorgesehen ist, mittels derer die Meßwertaufnahme so steuerbar ist, daß während der Relativbewegung eine Reihe von aufeinanderfolgenden Meßwerten an genau definierten Meßpunkten der Oberfläche aufnehmbar ist.

6. Vorrichtung gemäß Anspruch 5, dadurch gekennzeichnet, daß der Laser (50) bei der Messung einen geringen Abstand zur zu messenden Oberfläche aufweist, wobei der Abstand vorzugsweise weniger als 12 cm beträgt.

7. Vorrichtung gemäß Anspruch 5 oder 6, dadurch gekennzeichnet, daß zumindest ein Meßrad (80) vorgesehen ist, welches während der Messung auf der zu messenden Oberfläche aufgesetzt ist, und sich während der Relativbewegung zwischen der Vorrichtung und der zu messenden Oberfläche dreht, und
daß dieses Meßrad mit einem Drehwinkel-Geber (86) verbunden ist, der ein elektrisches Signal ausgibt, welches für den von dem Meßrad zurückgelegten Drehwinkel repräsentativ ist.

8. Vorrichtung gemäß Anspruch 7, dadurch gekennzeichnet, daß ein Gehäuse vorgesehen ist, welches die Bauelemente der Vorrichtung aufnimmt, und
daß zumindest zwei oder mehr Räder (80, 82) oder Walzen vorgesehen sind, um das Gehäuse auf die zu messende Oberfläche aufzusetzen, und auf dieser zu verfahren.

9. Vorrichtung gemäß mindestens einem der Ansprüche 5 bis 8, dadurch gekennzeichnet, daß die Vorrichtung ein Display aufweist, durch welches die ermittelten Qualitätskennzahlen der Oberfläche angezeigt werden.

10. Vorrichtung gemäß mindestens einem der Ansprüche 5 bis 9, dadurch gekennzeichnet, daß dieser Laser (50) Licht mit einer Wellenlänge ausstrahlt, welche im Bereich der Wellenlänge des sichtbaren Lichtes ist.

## Claims

1. Method for quantifiable assessment of the physiological impression of reflective surfaces, and in particular of painted surfaces, using:
- a point source of light (10) of which the light beam is directed at a predetermined angle on to the surface (8) to be measured,
- a photodetector device (12) which detects the light reflected from the surface and outputs an electrical signal which characterises the quantity of the light detected,
- a computer (25) to which the signal output by the photodetector is supplied and which determines from it a quality index for the surface to be measured,
- wherein during the measuring procedure relative movement is caused to occur between the point source of light and the surface to be measured,
characterised in that
- the point source of light and the photodetector device are moved together relative to the surface to be measured,
- the relative movement between the point source of light, the photodetector device and the surface to be measured is detected by a displacement measuring device,
- the computer is controlled by a program stored in a memory (28) in such a way that the electrical signal from the photodetector is accepted at predetermined points on the surface to be measured and stored in a memory,
- for the determination of a surface measured-value at a given surface point X_{K} first of all a first number N₁ of successive brightness measured-values are accepted at equidistant measuring points which are situated before this value X_{K}, then the brightness measured-value for X_{K} is accepted, and then the brightness measured-value is accepted for a second number N₂ of measured-values at points on the surface which are situated after this measuring point X_{K}, a surface measured-value for the measuring point X_{K} is determined therefrom, and then one or more quality indices for the surface to be measured is or are derived from all the surface measured-values determined along the measuring distance.

2. Method according to claim 1, characterised in that the brightness measured-values are first determined for a predetermined number of equidistant measuring points on the surface to be measured and are stored, and then from the stored values the surface measured-values for a predetermined number of measuring points are determined, using in each case the respective neighbouring N₁ or N₂ brightness measured-values.

3. Method according to claim 1 or claim 2, characterised in that the number N₁ of the preceding brightness measured-values used in the evaluation is equal to the number N₂ of subsequent brightness measured-values which are taken into account.

4. Method according to claim 3 or claim 4, characterised in that for a series of accepted measurements of brightness measured-values more than one evaluation series is performed, the number N₁, N₂ of the preceding and/or subsequent brightness measured-values taken into account being different for each evaluation series.

5. Apparatus for quantifiable assessment of the physiological impression of reflective surfaces, in particular of painted surfaces, and in particular for carrying out the method according to one of claims 1 to 4, comprising:
- a point source of light in the form of a laser (50) of which the light beam is directed at a predetermined angle on to the surface to be measured,
- a photodetector (54) which is arranged so that it receives the light reflected from the surface and outputs an electrical signal which is representative of the quantity of light detected,
- an evaluation device which derives from the signals output by the photodetector a quality index for the surface to be measured,
characterised in that
- the photodetector (54) is provided with a filter (58) which is selected so as to allow preferred passage to light having the wavelength corresponding to the wavelength of the laser,
- the laser (50) and the photodetector (54) are disposed in a predetermined and unchangeable spatial arrangement to one another and are moveable relative to the surface to be measured, and
- a displacement measuring device (86) is provided by means of which the acceptance of measured-values can be controlled so that during the relative movement a series of successive measured-values can be accepted at precisely defined measuring points on the surface.

6. Apparatus according to claim 5, characterised in that during the measurement the laser (50) is a short distance from the surface to be measured, this distance preferably being less than 12 cm.

7. Apparatus according to claim 5 or claim 6, characterised in that
- at least one measuring wheel (80) is provided which during the measurement is placed on the surface to be measured and which rotates during the relative movement between the apparatus and the surface to be measured, and
- this measuring wheel is connected to an angle-of-rotation sensor (86) which outputs an electrical signal which is representative of the angle of rotation described by the measuring wheel.

8. Apparatus according to claim 7, characterised in that
- a housing is provided which accommodates the components of the apparatus, and
- at least two or more wheels (80, 82) or rollers are provided in order to place the housing on the surface to be measured and to travel thereon.

9. Apparatus according to at least one of claims 5 to 8, characterised in that the apparatus includes a display by means of which the determined quality indices of the surface are indicated.

10. Apparatus according to at least one of claims 5 to 9, characterised in that the said laser (50) radiates light with a wavelength which is in the visible light wavelength region.

## Revendications

1. Procédé d'évaluation quantifiable de l'impression physiologique produite par des surfaces réfléchissantes et en particulier de surfaces laquées ou peintes, procédé qui utilise:
une source lumineuse ponctuelle (10) dont le rayon lumineux est dirigé sous un angle prédéterminé sur la surface (8) à mesurer,
un dispositif photodétecteur (12) captant la lumière réfléchie par la surface et délivrant un signal électrique caractérisant la quantité de lumière captée,
un dispositif de calcul (25) aquel est amené le signal délivré par le photodétecteur et qui détermine à partir de ce signal un nombre caractéristique de qualité de la surface à mesurer,
avec production d'un mouvement relatif entre la source lumineuse ponctuelle et la surface à mesurer pendant l'opération de mesure,
**caractérisé en ce**
que la source lumineuse ponctuelle et le dispositif photodétecteur sont déplacés ensemble par rapport à la surface à mesurer,
que le mouvement relatif entre la source lumineuse ponctuelle, le dispositif photodétecteur et la surface à mesurer est relevé au moyen d'un dispositif de mesure de distance,
que le dispositif de calcul est commandé, par un programme stocké dans une mémoire (28), de manière que le signal électrique du photodétecteur soit reçu et stocké dans une mémoire à des points prédéterminés des surfaces à mesurer,
que, pour déterminer une valeur de mesure de surface à un point de surface X_{K} déterminé, on enregistre d'abord un premier nombre N₁ de valeurs de mesure de luminosité successives à des points de mesure équidistants situés avant cette valeur X_{K}, que l'on enregistre ensuite la valeur de mesure de luminosité pour X_{K}, que l'on enregistre après cela la valeur de mesure de luminosité pour un second nombre N₂ de valeurs de mesure à des points de la surface situés derrière ce point de mesure X_{K}, que l'on détermine à partir de ces valeurs une valeur de mesure de surface pour le point de mesure X_{K} et que, ensuite, on tire de toutes les valeurs de mesure de surface, déterminées le long du trajet de mesure, un ou plusieurs nombres caractéristiques de la qualité de la surface mesurée.

2. Procédé selon la revendication 1, caractérisé en ce que lon détermine et mémorise d'abord les valeurs de mesure de luminosité pour un nombre préfixé de points de mesure équidistants sur la surface à mesurer et que, à partir des valeurs mémorisées, on détermine ensuite les valeurs de mesure de surface pour un nombre préfixé de points de mesure en tenant chaque fois compte des N₁ ou N₂ valeurs de mesure de luminosité voisines.

3. Procédé selon la revendication 1 ou 2, caractérisé en ce que le nombre N₁ des valeurs de mesure de luminosité précédentes utilisées dans l'exploitation, est égal au nombre N₂ des valeurs de mesure de luminosité suivantes utilisées dans l'exploitation.

4. Procédé selon la revendication 2 ou 3, caractérisé en ce que, lors de l'enregistrement d'une série de mesures de valeurs de mesure de luminosité, on effectue un grand nombre de séries d'exploitations, en changeant pour chaque série d'exploitations le nombre N₁ de valeurs de mesure de luminosité précédentes et/ou le nombre N₂ de valeurs de mesure de luminosité suivantes.

5. Dispositif d'évaluation quantifiée de l'impression physiologique produite par des surfaces réfléchissantes, en particulier de surfaces laquées ou peintes et notamment pour la mise en oeuvre du procédé selon une des revendications 1 à 4, comprenant:
une source lumineuse ponctuelle sous la forme d'un laser (50) dont le rayon lumineux est dirigé sous un angle préfixé sur la surface à mesurer,
un photodétecteur (54) agencé de manière qu'il capte la lumière réfléchie par la surface à mesurer et délivre un signal électrique représentatif de la quantité de lumière captée,
un dispositif d'exploitation qui, à partir des signaux délivrés par le photodétecteur, élabore un nombre caractéristique de qualité de la surface à mesurer,
caractérisé en ce
que le photodétecteur (54) est pourvu d'un filtre (58) accordé de manière qu'il laisse préférentiellement passer la lumière ayant la longueur d'onde du laser,
que le laser (50) et le photodétecteur (54) ont une disposition dans l'espace préfixée et invariable l'un par rapport à l'autre et sont déplaçables par rapport à la surface à mesurer et
qu'un dispositif de mesure de distance (86) est prévu, au moyen duquel l'enregistrement des valeurs mesurées peut être commandé de manière que pendant le mouvement relatif, une série de valeurs mesurées successives puisse être enregistrée à des points de mesure exactement définis de la surface.

6. Dispositif selon la revendication 5, caractérisé en ce que le laser (50) présente une faible distance de la surface à mesurer lors de la mesure, distance qui est de préférence inférieure à 12 cm.

7. Dispositif selon la revendication 5 ou 6, caractérisé en ce qu'au moins une roue de mesure (80) est prévue, laquelle est appliquée sur la surface à mesurer pendant la mesure et qui tourne pendant le mouvement relatif entre le dispositif et cette surface, et que cette roue de mesure est reliée à un résolveur (86) délivrant un signal électrique représentatif de l'angle de rotation couvert par la roue de mesure.

8. Dispositif selon la revendication 7, caractérisé en ce qu'un boîtier est prévu pour recevoir les éléments de construction du dispositif et qu'au moins deux ou davantage de roues (80, 82) ou de rouleaux sont prévus pour appliquer le boîtier contre la surface à mesurer et le déplacer sur celle-ci.

9. Dispositif selon au moins une des revendications 5 à 8, caractérisé en ce qu'il comporte un affichage au moyen duquel les nombres caractéristiques de qualité de la surface sont visualisés.

10. Dispositif selon au moins une des revendications 5 à 9, caractérisé en ce que le laser (50) émet de la lumière dont la longueur d'onde est comprise dans le domaine des longueurs d'onde de la lumière visible.
